# EUROPÄISCHE PATENTSCHRIFT

(11) **EP 2 269 909 B1**
(45) Veröffentlichungstag und Bekanntmachung des Hinweises auf die Patenterteilung: **29.07.2015**
(21) Anmeldenummer: 10011066.7
(22) Anmeldetag: 25.03.2008
(51) Int. Cl.: B64D 11/06, B60N 2/015, B64D 11/00, B60N 2/08

(54) **Vorrichtung zum Festlegen von Gegenständen**
Device for the fixation of objects
Dispositif servant à fixer des objets

(30) Priorität: 22.03.2007 DE 102007014420; 25.03.2008 DE 102008015639
(43) Veröffentlichungstag der Anmeldung: 05.01.2011
(62) Teilanmeldung aus: 08734750.6
(73) Patentinhaber: allsafe Jungfalk GmbH & Co. KG, 78234 Engen (DE)
(72) Erfinder: Stubbe, Ingolf, 78244 Gottmadingen (DE)
(74) Vertreter: Patentanwälte und Rechtsanwalt Weiß, Arat & Partner mbB

(56) Entgegenhaltungen:
- WO-A1-2005/095209
- DE-A1- 3 232 234
- DE-U1-202005 010 919
- US-A- 4 456 206
- US-A- 5 489 172
- US-A- 5 520 357
- US-A1- 2007 228 215

## Beschreibung

Die Erfindung betrifft eine Vorrichtung nach dem Oberbegriff des Anspruchs 1.

### STAND DER TECHNIK

In vielen Bereichen des täglichen Lebens ist es notwendig, Gegenstände festzulegen, wobei die Position ggf. zuvor justiert werden muss. Die vorliegende Erfindung bezieht sich auf alle möglichen Anwendungen.

In diesem Zusammenhang wird auf die DE 202005010919 U1, die als nächstliegender Stand der Technik betrachtet wird, hingewiesen. Dort ist ebenfalls eine Vorrichtung zum festlegen eines Sitzes offenbart. Weiter wird auf die US 2007/228215 A1 hingewiesen, welche ebenfalls eine Vorrichtung zum Festlegen von Flugzeugsitzen offenbart.

Fahrzeugsitze in üblichen PKWs sind an kurzen Schienenstreifen festgelegt, wobei hier verschiedene Rastmittel verwendet werden. Als Beispiel wird auf die DE 102 24 454 A1 verwiesen. Bei Flugzeugen ist es bekannt, die Sitze an parallel verlaufenden Schienen festzulegen. Hierzu sind spezielle Sitzbefestigungen erforderlich, wobei die Festlegung meistens durch Verschrauben erfolgt.

Aus dem Bereich der Beförderungsfahrzeuge, wie dem Omnibusbau, ist vor allem die wandseitige Sitzbefestigung bekannt, wie sie beispielsweise in der DE-OS 27 15 548 beschrieben ist.

In diesem Zusammenhang wird ausserdem auf die DE 32 32 234 A1 hingewiesen. Dort ist ein Schnellspannelement für Schienenprofile offenbart. Ausserdem wird auf die WO 2005/095209 A1 hingewiesen, welche eine Halterung von Kabinenelementen in einem Flugzeug offenbart.

Alle diese Sitzbefestigungen sind schwer zu handhaben, so dass in der Regel ein Verschieben des Sitzes nicht erfolgt. Heute wird dies jedoch vermehrt auch im Omnibusbau gefordert, da der Omnibus nicht nur dem Personentransport, sondern auch dem Transport von beispielsweise mitgeführten Fahrrädern usw. dienen soll.

### AUFGABE

Aufgabe der vorliegenden Erfindung ist es, eine Vorrichtung der o.g. Art zu entwickeln, die eine sichere Festlegung des Gegenstandes, aber auch ein leichtes Lösen ermöglicht.

### LÖSUNG DER AUFGABE

Zur Lösung der Aufgabe führt der kennzeichnende Teil des Anspruchs 1.

Das bedeutet, dass anstelle von umständlichen Verschraubungen die Festlegung nunmehr durch die Betätigung eines Hebels erfolgt. Ein Hebel kann schnell bewegt werden, so dass eine Handhabung des Gegenstands wesentlich erleichtert ist.

Die Klemmeinrichtung soll eine Zentrierzunge aufweisen, die in die Nut eingreift. Diese Zentrierzunge muss so ausgestaltet sein, dass sie eine klemmende Wirkung erzielen kann. Beispielsweise könnte dies durch Spreizen in der Nut geschehen. Bevorzugt ist aber in der Nut eine Hinterschneidung vorgesehen, in die zumindest ein Teil der Zentrierzunge eingreifen kann, so dass sie zusammen mit beispielsweise einem Schienenstreifen eine Randkante der Nut zwischen sich aufnimmt und einklemmt. Hierzu muss allerdings die Zentrierzunge eine Bewegung durchführen können, was mit dem Hebel geschieht. Aus diesem Grunde ist die Zentrierzunge an einem Führungsstempel angeordnet, der den eben erwähnten Schienenstreifen durchsetzt, wobei an dem der Zentrierzunge gegenüberliegenden Ende des Führungsstempels der Hebel angelenkt ist.

Dieser Hebel weist ein exzentrisches Element auf, mit dem beim Drehen des Hebels der Führungsstempel bewegt werden kann. Dies ist eine Drucknase, die im Verhältnis zur Drehachse exzentrisch ausgestaltet ist.

Damit die Klemmwirkung noch abgefedert wird, sind Tellerfedern vorgesehen, so dass ein Klappergeräusch auch nach mehrmaliger Benutzung der Klemmeinrichtung immer noch wirkungsvoll verhindert wird.

Der Klemmeinrichtung ist ferner eine Justiereinrichtung zugeordnet. Dies bedeutet, dass zuerst der Gegenstand die gewünschte Position einzunehmen hat, was über die Justiereinrichtung geschieht. Erst danach wird der Gegenstand durch die Klemmeinrichtung an der Schiene festgelegt. Die Justiereinrichtung ist dabei die oben erwähnte Zentrierzunge, die ihren Platz in der Nut der Schiene, bevorzugt Airline-Schiene, findet.

Klemmeinrichtung und Justiereinrichtung bilden zusammen eine Einheit, die an dem Schienenstreifen festgelegt ist.

Die Vorrichtung ist noch eine Einrichtung zum Ausgleichen von ungenauen Anordnungen von Bauteilen, insbesondere des Abstandes zwischen zweier Schienen zugeordnet sein. Hierzu umfangen den Führungsstempel zwei Exzenter, die zudem noch in sich exzentrisch geführt. Hierdurch ist die gesamte Vorrichtung wesentlich variabler gestaltet.

Als Schiene kommt eine Airline-Schiene in Frage, wie sie in der DE 299 12 413 U beschrieben ist. Diese Airline-Schiene eignet sich besonders zum Einbau in Flugzeuge, Busse, Schiffe oder ähnliche Transportmittel.

### FIGURENBESCHREIBUNG

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine perspektivische Ansicht einer erfindungsgemässen Vorrichtung zum Festlegen eines Gegenstandes, insbesondere einer Trennwand in einem Flugzeug;
Figur 2 eine Seitenansicht der erfindungsgemässen Vorrichtung nach Figur 1;
Figur 3 einen Querschnitt durch die Vorrichtung nach Figur 2 entlang Linie XIII-XIII
Figur 4 perspektivische Ansichten der einzelnen Elemente der erfindungsgemässen Vorrichtung nach den Figuren 1 bis 3.

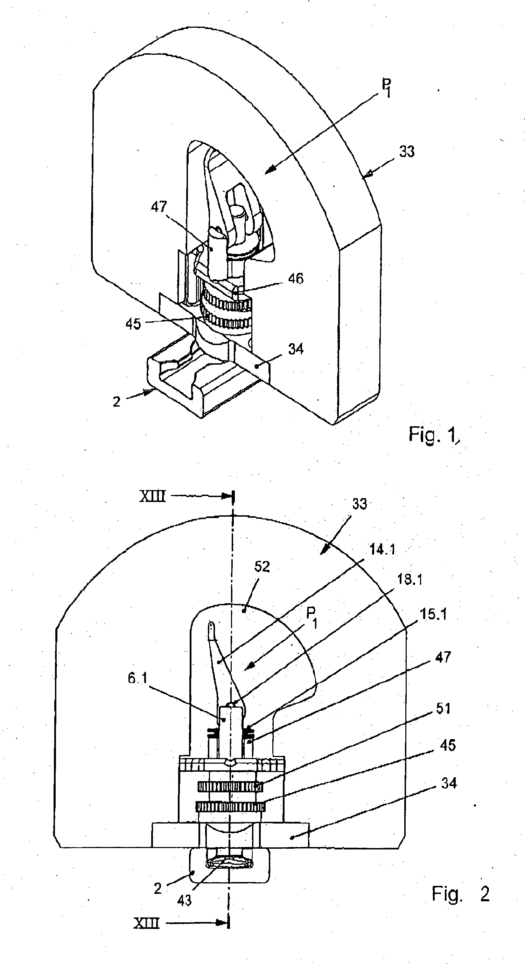

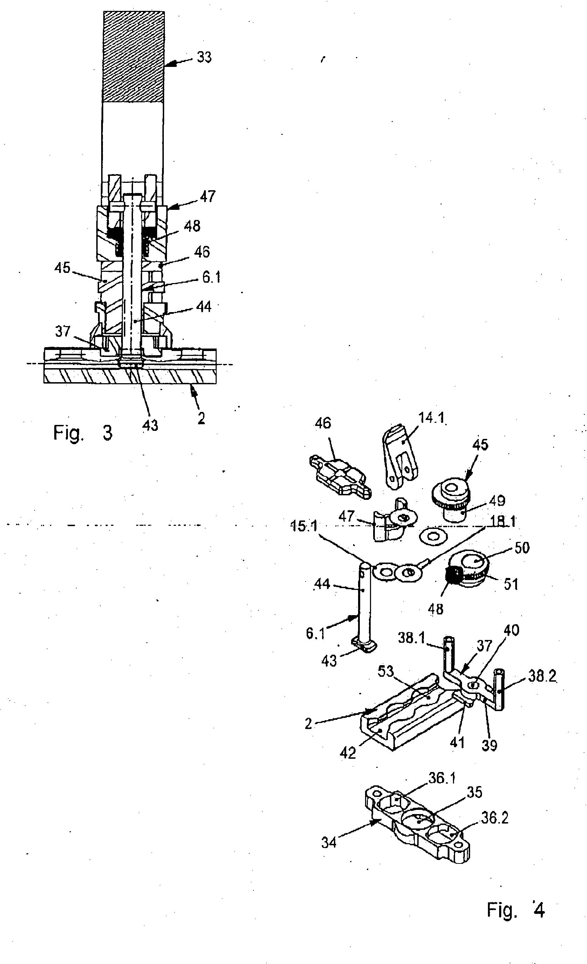

Gemäss Figur 1 und 2 ist eine erfindungsgemässe Vorrichtung P1 in einem Wandausschnitt 33 einer Trennwand gezeigt. Dieser Wandausschnitt 33 soll mit einer Airline-Schiene 2 verbunden werden. Hierzu sitzt in dem Wandausschnitt 33 ein Flansch 34, der mit dem Wandausschnitt 33 fest verbunden ist. Er besitzt gemäss Figur 4 etwa mittig eine Öffnung 35 und jeweils seitlich davon eine Durchgriffsöffnung 36.1 und 36.2. Durch diese Durchgriffsöffnungen 36.1 und 36.2 können von einem Retainer 37 aufragende Stifte 38.1 und 38.2 gesteckt werden, die über einen Streifen 39 miteinander verbunden sind. Etwa mittig in dem Streifen 39 befindet sich eine Öffnung 40. Ferner ist unter dem Streifen 39 eine Zentrierzunge 41 vorgesehen, die in ihren Aussenkonturen teilweise dem Öffnungsquerschnitt einer Nut 42 der Airline-Schiene 2 nachgeformt ist. Im Bereich der Öffnung 40 besitzt diese Zentrierzunge 41 ebenfalls eine nicht näher gezeigte Öffnung.

In Gebrauchslage werden die Öffnung 40 des Streifens 39 und die nicht gezeigte Öffnung der Zentrierzunge 41 von einem Führungsstempel 6.1 durchgriffen, der mit einem Hammerkopf 43 von unten her an dem Retainer 37 anschlägt. Danach durchzieht der Führungsstempel 6.1 mit einem Schaft 44 einen Exzenter 45, einen Retainerdeckel 46, einen Verriegler 47 und in dem Verriegler 47 eine Druckfeder 48 und ein Tellerfederpacket 15.1. Danach bildet der Führungsstempel 6.1 mit einem Schwenkhebel 14.1 eine Drehachse 18.1 aus. Der Exzenter 45 sitzt mit einer exzentrisch angeordneten Hülse 49 in einer Öffnung 50 eines zweiten Exzenters 51.

Die Funktionsweise dieses Ausführungsbeispiels ist folgende:
In Ausgangslage befindet sich der Hebel 14.1 in einer um 90° geschwenkten, gelösten Lage innerhalb einer Ausnehmung 52 im Wandausschnitt 33. Hierbei greift der Führungsstempel 6.1 mit dem Hammerkopf 43 tief in die Schiene 2 ein, wozu er durch eine der kreisringartigen Öffnungen 53 der Nut 42 der Schiene 2 eingesetzt wird. Nunmehr kann die Vorrichtung P1 zusammen mit dem Wandausschnitt 33 entlang der Schiene 2 verschoben werden, wobei der Hammerkopf 43 die sich verengenden Bereiche der Schiene 2 untergreift. Das Verschieben geschieht solange, bis die Zentrierzunge 41 ihren Platz zwischen zwei Öffnungen 53 der Schiene 2 gefunden hat, wobei dann die Zentrierzunge 41, da sie in ihrer Aussenkontur zumindest teilweise der Nut 42 nachgebildet ist, in Bereiche der Öffnungen 53 eingleitet. In dieser Gebrauchslage befindet sich der Hammerkopf 43 exakt unterhalb der engsten Stelle der Nut 42 zwischen zwei Öffnungen 53.

Nunmehr erfolgt ein Justieren der Vorrichtung P1 in X- und Y-Richtung durch Verdrehen der Exzenter 45 und 51, was vor allem dem Ausgleich von Schwankungen des Abstandes zwischen zwei parallel verlaufenden Schienen 2 dient.

Sobald die Vorrichtung P1 justiert ist, wird der Hebel 14.1 in seine in den Figuren 1 und 2 gezeigte Spannlage geschwenkt, wobei dies gegen die Kraft des Tellerfederpaketes 15.1 geschieht. Hierdurch wird in Folge der exzentrischen Anordnung der Drehachse 18.1 der Führungsstempel 6.1 vertikal angezogen und mit ihm der Hammerkopf 43 unter der Engstelle zwischen zwei Öffnungen 53 der Schiene 2 verspannt.

**Bezugszeichenliste**

| | | | | | |
|---|---|---|---|---|---|
| 1 | | 34 | Flansch | 67 | |
| 2 | Airline-Schiene | 35 | Öffnung | 68 | |
| 3 | | 36 | Durchgriffsöffnung | 69 | |
| 4 | | 37 | Retainer | 70 | |
| 5 | | 38 | Stift | 71 | |
| 6 | Führungsstempel | 39 | Streifen | 72 | |
| 7 | | 40 | Öffnung | 73 | |
| 8 | | 41 | Zentrierzunge | 74 | |
| 9 | | 42 | Nut | 75 | |
| 10 | | 43 | Hammerkopf | 76 | |
| 11 | | 44 | Schaft | 77 | |
| 12 | | 45 | Exzenter | 78 | |
| 13 | | 46 | Retainer Deckel | 79 | |
| 14 | Hebel | 47 | \/erriegler | | |
| 15 | Tellerfederpaket | 48 | Druckfeder | | |
| 16 | | 49 | Hülse | | |
| 17 | | 50 | Öffnung | | |
| 18 | Drehachse | 51 | Exzenter | | |
| 19 | | 52 | Ausnehmung | | |
| 20 | | 53 | Öffnung | | |
| 21 | | 54 | | | |
| 22 | | 55 | | | |
| 23 | | 56 | | P | Vorrichtung |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | Wandausschnitt | 66 | | | |

## Patentansprüche

1. Vorrichtung zum Festlegen von Gegenständen (33), insbesondere von Trennwänden in einem Fahrzeug, an einer Schiene (2), welche Schiene (2) eine Airline - Schiene ist, welche eine in Längsrichtung verlaufende durchgehende beidseits hinterschnittene Nut aufweist, wobei die Randkanten der Nut mit voneinander beabstandeten, aber sich gegenüberliegenden Mulden versehen sind, die jeweils zusammen eine durch die Nut unterbrochene kreisrunde Öffnung ausbilden, wobei die Vorrichtung eine mittels eines Hebels (14.1) lösbare Klemmeinrichtung (12) beinhaltet, welche einem und dem Gegenstand (33) zugeordnet ist,
**dadurch gekennzeichnet,**
**dass** der Klemmeinrichtung (12) eine Justiereinrichtung (41, 45, 51) aufweist, die ein Justieren der Vorrichtung in X- und Y-Richtung zulässt, wobei die Klemmeinrichtung (12) eine Zentrierzunge (41) und einen Hammerkopf (43) aufweist, der in die Nut (42) eingreift und nach einem Verschieben oder Verdrehen zum Klemmen oder Verspannen die Nut (42) hintergreift, wobei der Hammerkopf (43) an einem Führungsstempel (6.1) angeordnet ist, wobei an dem dem Hammerkopf (43) gegenüberliegenden Ende des Führungsstempels (6.1) der Hebel (14.1) angelenkt ist, wobei der Hebel (14.1) eine im Verhältnis zu einer Drehachse (18.1) exzentrische Drucknase aufweist, wobei sich der Hebel (14.1) auf Tellerfedern (15.1) abstützt, wobei unter den Tellerfedern (15.1) eine Druckfeder (48) in einem Verriegler (47) angeordnet ist, wobei
die Zentrierzunge (41) bzw. der Hammerkopf (43) etwa kreis- oder teilkreisförmig ausgebildet ist und in zumindest eine seitliche durch die Nut gebildete Hinterschneidung eingreift, wobei
unter dem Verriegler (47) und von dem Führungsstempel (6.1) durchsetzt, ein, bevorzugt zwei Exzenter (45, 51) vorgesehen ist/sind, die exzentrisch ineinander greifen, wobei
ein Exzenter (45) in eine Öffnung (35) in einem Flansch (34) eingreift, der mit dem festzulegenden Gegenstand (33) verbunden ist., wobei die Vorrichtung einen Retainer (37) beinhaltet, des die Zentrierzunge (41) aufweist und der dem Flansch (34) zugeordnet ist.

## Claims

1. A device for fastening objects (33), in particular partition walls in a vehicle, to a rail (2), which rail (2) is an airline rail with a continuous groove which runs in the longitudinal direction and is undercut at both sides, wherein the boundary edges of the groove are provided with depressions which are spaced apart from one another but are facing and which together form in each case a circular opening interrupted by the groove, wherein the device includes a clamping device (12), releasable by means of a lever (14.1), associated with the object (33),
**characterized in that**
the clamping device (12) has an adjustment device (41, 45, 51) which permits an adjustment of the device in X and Y direction, wherein the clamping device (12) has a centering tongue (41) and a hammer head (43) which engages into the groove (42) and after displacement or rotation engages behind the groove (42) for clamping or bracing, wherein the hammer head (43) is arranged on a guide plunger (6.1), wherein the lever (14.1) is articulated on the end of the guide plunger (6.1) facing the hammer head (43), wherein the lever (14.1) has a pressure projection which is eccentric relative to a rotational axis (18.1), wherein the lever (14.1) is supported on disc springs (15.1), wherein below the disc springs (15.1) there is a pressure spring (48) arranged in a locking means (47), wherein the centering tongue (41) or the hammer head (43) is substantially circular or in the shape of part of a circle and engages at least one lateral undercut formed by the groove, wherein one, preferably two, cam(s) (45, 51, is/are provided below the locking means (47) and is/are passed through by the guide plunger (6.1), which cams eccentrically engage one another, wherein a cam (45) engages an opening (35) in a flange (34) connected to the object (33) to be fastened, wherein the device includes a retainer (37) which has the centering tongue (41) and is associated with the flange (34).

## Revendications

1. Dispositif servant à fixer des objets (33), en particulier de cloisons dans un véhicule, à un rail (2), lequel rail (2) est un rail aérien présentant une rainure continue en contre-dépouille des deux côtés s'étendant dans la direction longitudinale, dans lequel les bords marginaux de la rainure sont pourvus de creux distants l'un de l'autre, mais opposés l'un à l'autre, formant ensemble chaque fois une ouverture circulaire interrompue par la rainure, le dispositif contenant un moyen de serrage (12) pouvant être libéré au moyen d'un levier (14.1) et qui est associé à l'objet (33),
**caractérisé en ce**
**que** le moyen de serrage (12) présente un dispositif de réglage (41, 45, 51) qui permet un réglage du dispositif dans les directions X et Y, le dispositif de serrage (12) présentant une languette de centrage (41) et une tête de marteau (43) qui s'engage dans la rainure (42) et vient en prise, après un déplacement ou une rotation en vue du blocage ou serrage, par dernière la rainure (42), la tête de marteau (43) étant disposée sur un poinçon de guidage (6,1), le levier (14.1) étant connecté de manière articulée à l'extrémité du poinçon de guidage (6.1) opposée à la tête de marteau (43), le levier (14.1) présentant un nez de pression excentrique par rapport à un axe de rotation (18.1), le levier (14.1) s'appuyant sur des rondelles-ressorts (15.1), sous les rondelles-ressorts (15.1) étant disposé un ressort de compression (48) dans un verrouilleur (47), dans lequel
la languette de centrage (41) ou la tête de marteau (43) est réalisée de forme environ circulaire ou partiellement circulaire et s'engage dans au moins une contre-dépouille formée latéralement par la rainure, dans lequel
sous le verrouilleur (47) sont prévus, traversés par le poinçon de guidage (6.1), un, de préférence deux excentriques (45, 51) qui s'engagent de manière excentrique l'un dans l'autre, dans lequel
un excentrique (45) s'engage dans une ouverture (35) dans une bride (34) qui est connectée à l'objet (33) à fixer, dans lequel
le dispositif contient un moyen de retenue (37) qui présente la languette de centrage (41) et qui est associé à la bride (34).
